# EUROPEAN PATENT APPLICATION

(11) **EP 2 439 992 A1**
(43) Date of publication of application: **11.04.2012**
(21) Application number: 10251701.8
(22) Date of filing: 30.09.2010
(51) Int. Cl.: H04W 64/00

(54) **Tracking the location of a terminal device roaming between a plurality of WLANs**

(71) Applicant: British Telecommunications Public Limited Company, London EC1A 7AJ (GB)
(72) Inventor: The designation of the inventor has not yet been filed
(74) Representative: Brinck, Coreena Fiona Anne

(57) **Abstract**

The application relates to a communications system which provides a means of monitoring signalling traffic for the purpose of providing location information of a mobile WLAN device which roams between a plurality of short-range WLAN network.
Many communications systems provide the location by signal triangulation or satellite-based techniques. The application however relates to determining the location of a mobile WLAN device by determining the location of the WLAN access point. This is achieved by a monitoring system (40) which is arranged to collect data generated by signalling traffic such as connection requests and/or assignment of an IP address to the roaming device. The monitoring system (40) processes the received signalling traffic to determine appropriate information, for example, information which enables the identification of the device and/or the location of the wireless network access point (14). The monitoring systems data store (44) contains the device Mac address, a time stamp recording when traffic was intercepted from the device and/or alternative the time the IP address of the device was allocated by the access point, the access point's IP address and a reference number for the relevant DSLAM data base (34). By providing a suitable interface to the monitoring system itself, and processing the location data retrieved, the location of a device can be shown on a suitable map display.

## Description

The present invention relates to a method and system for tracking the location of a device roaming in an open-access wireless local area network. In particular, but not exclusively, the invention relates to a method of fixing a device location to within a short-range WLAN, for example, one with a range of a few metres or 10s of meters, and to tracking the location of this device in real-time.

In packet-based communications networks such as those which carry internet protocol (lP) traffic, to enable more devices to make efficient use of the lP addressing scheme network address translation (NAT) is applied within the communications networks. NAT partitions the addressing domains, so that whilst an IP address will always resolve uniquely within any one addressing domain, reuse of the same lP address is possible in different domains. This creates an inherent problem when trying to resolve a packets IP address to a particular source, as the source lP address is not directly determinable if any NAT has occurred.

Telecommunications networks collate data on a massive scale to enable appropriate authentication, authorisation, and accounting functionalities to be performed directly for their own clients and for other service providers who use the telecommunications network infrastructure. Wireless communications networks collate data differently due to the mobility of the devices using the network and services provided over the wireless communications network infrastructure.

Many network architectures are known in the art which enable data interception to occur. Such schemes amass traffic on a huge scale and are usually configured so that either the content of the data can be monitored or the quality of the communications service the device generating the data is using and how this is affecting data transmission can be assessed.

Many communications systems provide location services such as those based using signal triangulation or satellite-based location services. The invention relates to providing a service which uses the location of the network access point which has assigned that device its communications source address. For example, an access point with appropriate modem functionality such as the BT Home Hub will assign an Internet Protocol service address when a communications-enabled device (which may comprise a mobile telephone type device, or portable computer or other mobile device having WLAN communications capabilities) moves into the area in which it provides a roaming service WLAN. Such access points are configured to support a plurality of such devices and so are configured to be able to assign a range of suitable (e.g. lP) service addresses. Typically such WLANs use short range communications protocols such as 802.11 (WiFi) or 802.16 (WiMax) and can support a limited number of guest access (or roaming) devices.

It is possible for such an access point (AP), a term used herein to refer collectively to both to the wireless local area network providing access and to the DSL modem it uses to transmit data over the public access network (or to the optical equivalents to the DSL functionality), to be mobile itself, as service subscribers may reuse an access point when they move to different premises, The invention seeks to prove a communications system for and method of determining a device location in which a check is performed each time an access point renegotiates a connection to ensure that the ServicelD it is using is consistent with the address for service stored in the network in association with that ServicelD and access point. An example of such an AP is the HomeHub™ currently distributed by British Telecommunications plc for use over DSL connections. One embodiment of the invention enables, should any customer move their Home Hub to another DSL connection, for the communications network to verify that the service address of an AP is the correctly associated with the ServiceID it is using. The ServiceID is determined by the DSLAM ports via which the AP has established an initial layer 2 point to point connection with an access server for communicating its authentication credentials to the network. In this way, the network operator can be made aware of such a move when the AP powers up or for some other reason negotiates a DSL session over the access network. This provides a means of more accurately tracking devices through their association with such APs in real time within such communications systems..

Embodiments of the drawings will now be described with reference to the accompanying drawings in which
Figure 1 shows schematically an exemplary scenario in which a communications system according to the invention may be deployed;
Figure 2 shows schematically a basic overview of elements of the access network architecture for the embodiment shown in Figure 1;
Figure 3 shows schematically elements of an access network communications system and the data which may be collected when an AP seeks to establish a connection request;
Figure 4 shows schematically the data flows which are generated when an AP seeks to establish a connection request;
Figure 5 shows the network architecture of a communications system which captures a device location using traffic generated by the device which is intercepted by a monitoring system according to for an embodiment of the invention;
Figures 6A, 6B, and 6C show alternatives address assignment schemes which an AP can implement to assigning an IP address to a roaming device according to different embodiments of the invention;
Figures 7A,B, and C show the different types of traffic monitored in the different embodiments of the invention depending on the address assignment scheme implemented by the AP;
Figures 8a and 8b show how location information is collated a monitoring system according to an embodiment of the invention;

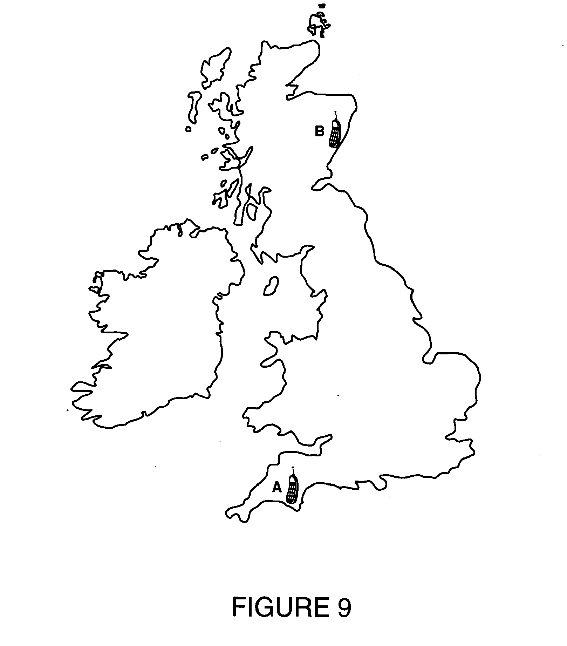

Figure 9 shows the geographic scale between two locations A and B;
Figure 10 shows the local implementation of a monitoring system according to an embodiment of the invention suitable for monitoring an area of the geographic scale shown in Figure 10a; and
Figure 11 shows a hierarchical monitoring system for an area of the geographic scale shown in Figure 10a.

The best mode of the invention will now be described with reference to the accompanying drawings. In the following description of the preferred embodiments of the invention, those of ordinary skill in the art will be aware of modifications and functional equivalents to those features of the invention which are described herein below and that certain features of the invention may be omitted from the description for the sake of brevity and clarity where their inclusion and function as part of the invention is apparent and known to those of ordinary skill in the art.

A communications system architecture is described herein which provides a means of monitoring data for the purpose of providing location information on a communications-enabled device which is capable of using a plurality of short-range WLAN networks in a guest context. A device can thus performing a sort of "roaming" although no formal "handover" may be implemented between the networks. A device may be locatable according to the invention within the area covered by one WLAN but then move out of cover and into an area with no WLAN service and be unlocatable before being locatable again when it moves into another area where WLAN coverage is provided. Although each WLAN may cover an area of less than 100 m², the local monitoring system can be scaled provide cover on a national or international geographic scale.

A network infrastructure is described which enables the collation of information from a plurality of data stores associated with telecommunications services. The data stores are associated with different control domains and/or services and access is constrained by the inherent data collection techniques used to populate each data store, which results in differing data record structures searchable using a plurality of different search indices. This enables the physical location of a digital subscriber line (DSL) modem for example to be determined remotely within the network in real time.and so enables a plurality of different location services to be provided which relate to the location of the DSL modem and/or to the location of devices using the modem. As devices may be mobile, an inherent constraint is that their location must be fixed within a reasonable amount of time, preferably in real-time.

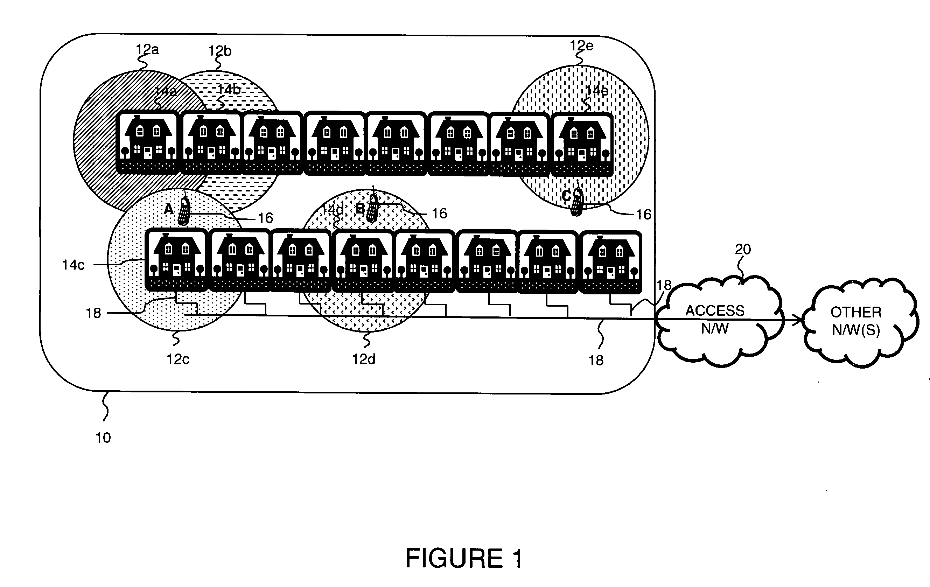

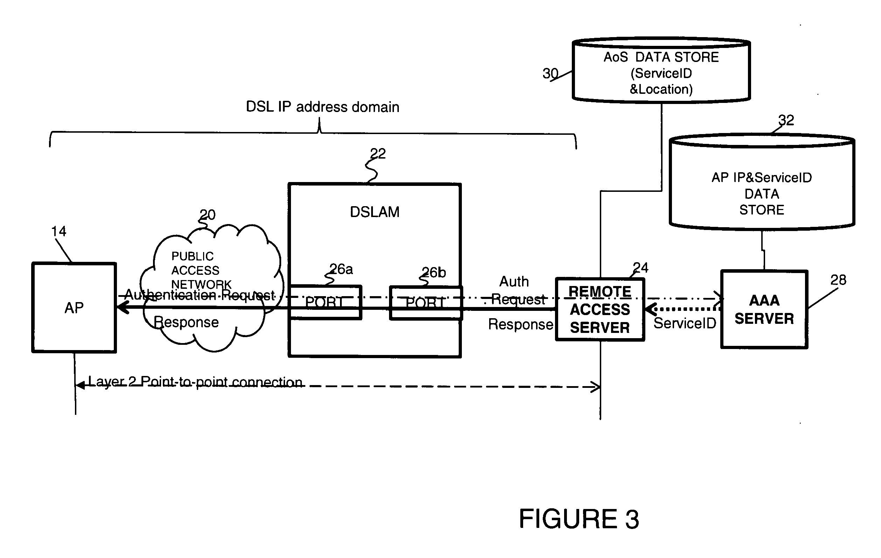

Figure 1 shows schematically a communications system 10 comprising a plurality of short-range wireless local area networks (WLANs), for which five are shown in this exemplary embodiment. WLANs 12a,..12e are provided by wireless access points (APs 14 ― not shown in Figure 1, see Figure 3) which are located within a plurality of residential premises. As shown in Figure 1, each of the APs 14a,...,e is configured to provide an open-access wireless communications network service to roaming communications-enabled devices, one of which, roaming device 16 is shown at a plurality of locations A, B, and C in communications system 10. The term "roaming device" will be referred to herein despite the face that one WLANs may be the "roaming" device's home or native WLAN, for which it is configured to associate with the private WLAN that particular AP provides. In the embodiment of the invention shown in Figure 1 and described later hereinbelow, each of the access points 14a,...,e is configured to use a Digital Subscriber Line DSL-type of communications link 18a,....,e for example by integrating or being connected to an appropriate DSL modem type and the identifier for each AP may be associated physically with the modem component of the AP. The DSL-type communications links 18 are transported to share a common access line over public access network 20 to the Digital Subscriber Line Access Multiplexer (located at the nearest aggregation point/local exchange. If optical or other forms of communications infrastructure is available for use by the AP, the AP may be provided with alternative modem type functionality to use other appropriate communication protocols for access to the nearest digital exchange using these communications links.

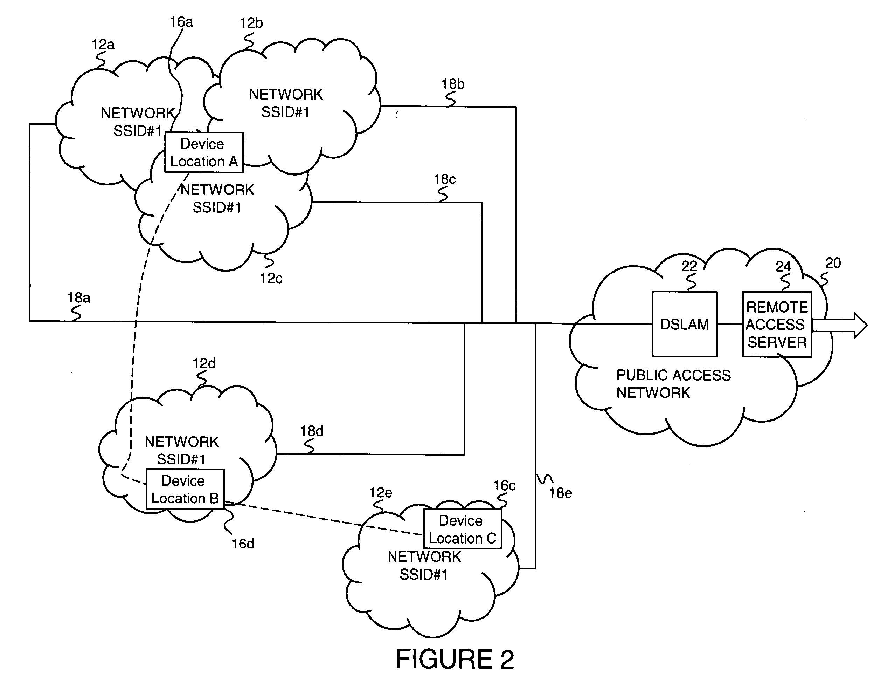

Figure 2 shows schematically the network coverage provided at each of the locations A, B, and C shown in Figure 1. In Figure 2, when the roaming device 16 is at location A, it receives beacons from networks with service set identifier SSID from the access points provided at premises 12a,12b, and 12c respectively. At location B, it receives beacons from the wireless network with service set identifier #1, and at location C it receives beacons from another wireless network with service set identifier #1. The Service Set Identifier ("SSID#1") identifies a wireless network as one providing open-access to appropriately configured wireless communications-enabled devices, such as device 16. As shown in Figure 2, each of the open-access networks 12a,...,e provides connectivity to one or more remote networks for roaming device 16 using a digital subscriber line (DSL) communications link 18 over the public access network 20. The DSL communications links 18 are aggregated at a suitable link-access device providing an aggregation point for multiple subscriber lines, for example, at the DSLAM 22 at the local exchange. DSLAM 22 aggregates data traffic from a plurality of subscribers for forwarding to a switch or router over a suitable multiplexed connection using a communications protocol such as, for example, Frame Relay, ATM, or Ethernet to a remote access server (RAS) 24.
RAS 24 is configured to act as the logical network termination point when an access point 14 seeks to re-establish its connectivity over the access network 20.
Referring now to Figure 3 of the accompanying drawings, when the AP 14 establishes a layer 2 connection via DSLAM 22 with RAS 24, the RAS 24 is arranged to verify that he correct DSLAM port is being used by verifying if the ServicelD associated with that port has a termination location which matches the address for service associated with the device identity (the APID) of the AP which is trying to re-establish its connectivity.

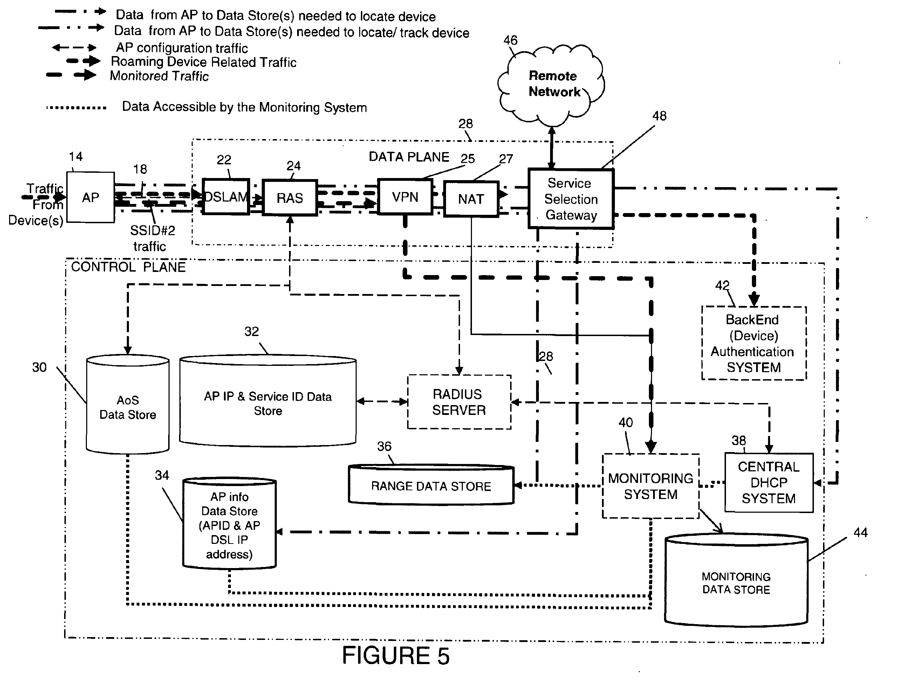

This requires RAS 24 to access an address for service (AoS) data store 30. Each service subscriber's (e.g. user's) service identifier (ServicelD) functions as a broadband calling line identifier for the access link which connects that subscriber's AP 14, which combines both the WLAN and DSL modem and it is this combination that has the ServicelD, to DSLAM 22 via DSLAM port 26a. The AP is then connected via DSLAM port 26b to RAS 24. The ServicelD an AP uses (or equivalently, just the DSL modem used if no WLAN is being provided) is also used to indicate which particular internet service providers communications service the AP 14 is configured to use. The AoS database 30 maps the Service lD of each line connected to the DSLAM to the physical address of the network termination point of the physical line over which the access link 18 is provisioned. In this way, the RAS is able to associate the ServiceID used by an AP 14 with geographic address information, such as a street and premises number. The data stored in AoS database 30 is accessible to monitoring system 40 shown in Figure 5 using a suitably configured interface mechanism which enables a look-up to be performed based on a ServiceID sent in a look-up request, which enables the monitoring system to retrieve location information.

In order for AP to form a connection via which communications with remote networks can be established , the AP 14 must be authenticated for use of its communication service provider's communications network services. To achieve this, RAS 24 functions as a client to an authentication system for service providers, such as one which is implemented using what is known in the art as an AAA server system which implements Authentication, Authorisation, and Accounting functionality. An exemplary AAA server system known in the art comprises uses the Remote Authentication Dial-In User Service (RADIUS) communications server protocol , and such a server system is shown in Figure 3 as RADIUS server 28. RADIUS is a networking protocol which provides centralised authentication, authorisation, and accounting management functionality to enable remote clients, e.g., computers or mobile communications devices and computers, such as communications device 16, to connect to and use a communications network service.. The RAS 24 is also be referred to in the art as a Network Access Device (NAD), a Network Access Server (NAS), or a Broadband RAS (B-RAS, BRAS, or BBRAS)), and in the context of this invention may also function as a virtual private network (VPN) termination point for communications traffic generated by roaming devices using a open guest access wireless LAN AP 14 provides in addition to the private subscriber WLAN it supports.

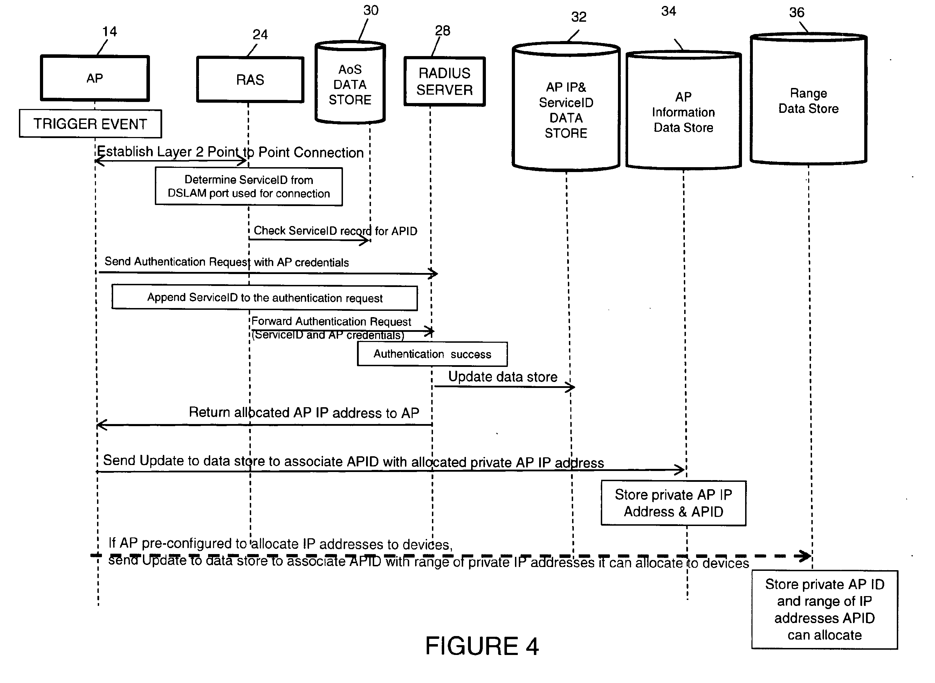

The RADIUS server 28 is configured to authenticate connection requests which are forwarded by the RAS 24 from a requesting AP 14 over a suitable layer 2 connection, for example, PPPoE. As shown in Figure 4, the RADIUS server 28 is configured to query a central DHCP server to assign an lP address to the AP 14. The lP address assigned is then stored in a local or remote AP lP&ServicelD data store 32 with the ServicelD which the RAS server 24 has forwarded with the AP's access request. This may be the same or a different data store to the one which holds records enabling the ServicelD to be authenticated using the credentials the AP has provided which the RAS 24 has also forwarded, such as a username and /or password for the AP). In either case, a ServiceID searchable record is updated by the RADIUS server to show the DSL IP address assigned to the AP 14. The DSL IP address is assigned directly by the RADIUS server to the AP 14.

If, however, the lP address has already been assigned by the RAS 24 and included in the connection request forwarded, then the RADIUS server updates database 32 and may be configured to forward this information to the DHCP server 38 shown in Figure 4.

Figure 4 shows schematically the signalling and message flows which enable AP 14 to establish a connection over the network over which communications can be established with remote networks using the communications service provided by the AP 14's service provider.

In Figure 4, the AP 14 is configured to send a connection request to the RAS 24 via DSLAM 22 after a suitable triggering event has occurred, such as on power-up of the AP or whenever it needs to re-establish its DSL connection. In this way, should a customer move their AP (Hub) to another valid connection in a different location we would still be able to locate the change of address. The AP 14 first establishes a suitable layer 2 point-to-point connection with the RAS 24. Connection information is then obtained by the RAS 24 by performing an initial access negotiation with the AP 14 to establish connection information and service credentials such as, for example, the APID, the DSLAM port number the request was received from, and a service subscriber "username" and "password", and a Service Identifier (ServicelD) for the service the AP has been configured to use (which should correspond to the DSLAM port used if the AP has not changed its location since it was provisioned for providing DSL connectivity at a particular address). The RAS 24 then forwards relevant connection information and the service credentials including the ServicelD for the requesting AP in an authentication request which is sent to the RADIUS server 28 so that a suitable IP address can be allocated to the AP 14.

The RADIUS server 28 performs a lookup operation using the ServicelD information provided on a local or remote RADIUS authentication database 32. The RADIUS server 28 verifies that the subscriber's username and password are valid, and may perform other security functions on the authentication request. If the RADIUS server 28 locates the serviceID and the credentials provided show the AP is authenticated to use that ServicelD, it returns an access acceptance message and the DSL IP address it has allocated to the AP 14, with the return path being via the RAS 24. The lP address may be assigned using any suitable assignment process.

The RADIUS server 28 may also return other list information from the same AP data record associated with that service identifier, such as for example, the subscriber's authorization and/or connection parameters which the BRAS is then able to access.

The RADIUS server 28 is configured to update the AP lP address & ServicelD data store 32 with the lP address it has allocated to a particular ServicelD. Where an AP has been pre-configured with a range of allocatable lP addresses and incorporates a local DHCP type functionality , the lP address range with which it has been associated is then stored in the network in association with the APID used by the AP 14. If, alternatively, the AP is configured to use remote DHCP, then it will generate a query whenever it needs to allocate an lP address to a device 16 which it will send to a remote DHCP server 38.

Data store 32 is accessible by the monitoring system 40 shown in Figure 5 using a suitable interface which enables the monitoring system to perform a look-up type operation using an lP address to retrieve the ServicelD allocated to an AP 14. If instead, the serviceID is not authorised for use by a given AP by the RADIUS server, i.e., if the authentication or authorisation process fails, the RADIUS server 28 rejects the request and returns an access rejection message.

The RAS 24 can thus accept or refuse the connection request from AP 14 based on the response from the RADIUS server. When a plurality of APs are authenticated and a connection established between each AP 14 and the RAS 24, a plurality of the ports 26a, 26b of the DSLAM may be occupied depending on the number of different secure tunnels (to each respective AP) which are established to distinguish trafific from each AP's subscriber's device(s) from roaming device traffic. Each tunnel terminates using different virtual private networks (VPNs) or alternatively MPLS labels at a VPN node 25 which is located more centrally within the access network than RAS 24, for example, between the RAS 24 and the service selection gateway (SSG) 48 located in the core network.

A RAS 24 may also generate usage and accounting data which may be forwarded by the RAS 24 to the RADIUS server 28, which in turn may store or forward the data it receives to AoS data store 30 support billing for the services provided to the subscriber in some embodiments of the invention.

Those of ordinary skill in the art will be aware that the VPN node providing the VPN termination functionality for the secure tunnel used for traffic generated by devices 16 that associate with an AP 14 may be hosted on the same physical platform as the RAS 24, and/or on the same physical platform that hosts a NAT functionality (shown in Figure 4 as NAT 27).

Once the AP 14 has been authenticated by the RADIUS server 28 to enable it to use a particular ServicelD to access an ISP communications service, the AP 14 is configured to send an XML message or similar type of signalling message to a special "AP information" data store 34 which contains the AP's APID and provides details of the private lP address the Radius server has allocated to the AP 14, the AP's DSL lP address. If this message is sent over the access network to the service selection gateway SSG 48 (shown in Figure 5) the source address of the AP from which it originates will undergo network address translation (NAT). Accordingly, to overcome the problem of identifying which AP has sent the message, the data records which hold the range of allocatable lP addresses for a device using a particular AP are associated with a unique identifier for the AP, similar to a Media Access Control (MAC) address, which is referred to herein as the "APID".

The data stored in data base 34 is thus available for access through a suitable interface mechanism by the monitoring system 40 shown in Figure 5. The interface mechanism enables the monitoring system 40 to perform a look-up request based on the APID to return the AP's DSL lP address, which is provided within the body of the message the AP sends to update data store 36 and so does not undergo lP address translation.

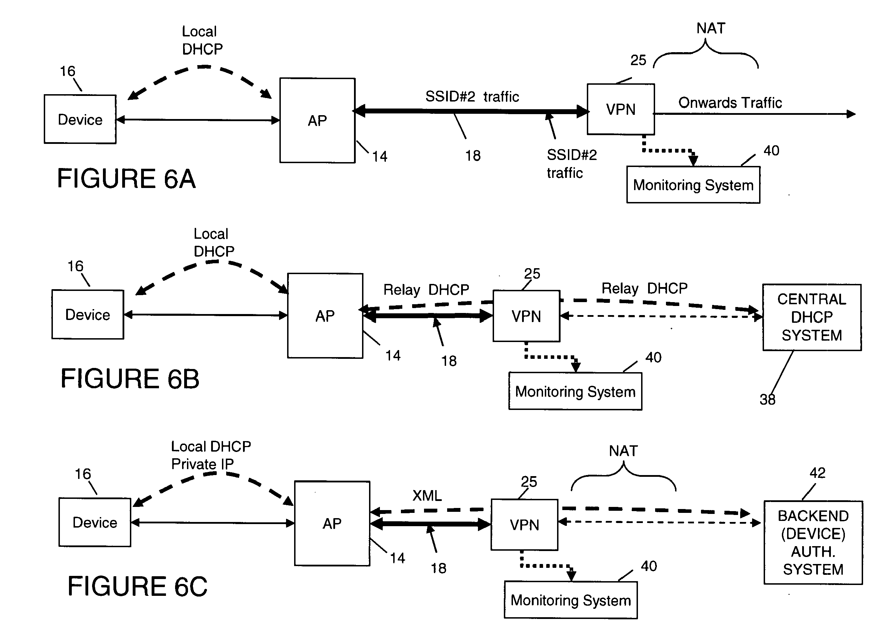

The lP address range which devices can be allocated to use when using an AP's network may be preconfigured on each the AP 14, so that the AP is already aware of this information (here each WLAN provides a separate addressing domain for the devices within it). This range information is not network accessible however until it is stored in either the special AP information data store 34 (for example, it may be included in the same XML message or similar signalling message that updates this store to indicate the APID has been allocated a DSL IP address).
As shown in Figure 5, the AP 14 is configured to send the range of IP addresses which can be allocated to a device using that AP's network 12 (for example, using one of the mechanisms described later hereinbelow with reference to Figures 6A to 6C), to another special "Range" data store 36 which stores the range of lP addresses that a given AP lD can assign to devices within its networks. The lP addresses which are stored in these data store records are those which resolve in the access domain to the AP and the devices using its network, i.e., the private lP addresses which can be resolved to devices using the DSL access link 18. This enables the range of lP addresses which an AP with a particular lP address can range allocate to be associated with that AP's ServicelD, and enables a device to be associated with an AP if the device is determined to have a private DSL resolvable lP address which falls within the range of IP addresses associated with a particular AP. The data stored in data bases 34 and 36 is similarly accessible using a suitably configured interface mechanism by the monitoring system 40 shown in Figure 5. Those of ordinary skill in the art will be aware that data stores 30, 32, 34, and 36 have been indicated separately, and it is possible for the corresponding data records of a plurality or all of these data stores to be subsumed into a single data record and hosted with the monitoring system's data store 44.

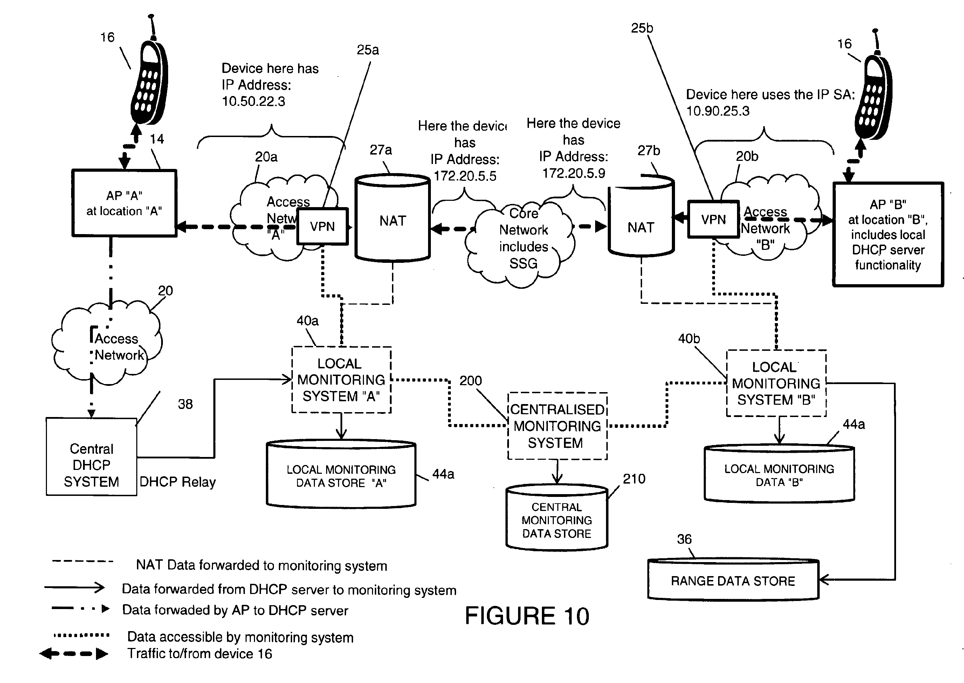

In the embodiment shown in Figure 5, however, for clarity it is shown schematically how the monitoring system 40 accesses several data stores to retrieve data and populate its own data store 44. Figure 5 omits to explicitly show how data indicating any network address translation which may occur in the communications system flows into the monitoring system for simplicity (see instead Figure 10). In Figure 5, the AP connection configuration traffic is shown by a fine dashed line. An indication of how the AP makes available in the network data which associates a device's private DSL lP address (which is the lP address which is resolvable over the DSL access link 18) with its own APID, and an indication of how the AP makes available over the network data which enables the AP's own private DSL address to be associated with its APID are shown using a dot-dash thick line. Figure 5 also shows using a thick dot-dot-dash line how the AP may update the DHCP server to indicate the address it has allocated to a device in a WLAN the AP provides. By enabling the DHCP server to know this information, it facilitates sharing this information with the monitoring system and enables the device to potentially be tracked over a larger geographic range (i.e. over several WLANs) by the monitoring system 40.

The various data interfaces for pushing or via which the data can be pulls to or by the monitoring data store are shown by heavy dotted lines. The traffic which the monitoring system receives via RAS 24 is shown as having a heavy long dash, and the roaming device traffic generated when the device which seeks actually use the roaming service the AP provides is shown as a heavy shorter dash.

Referring more generally to Figure 5, this shows a communications system 10 according to the invention which includes a monitoring system (MS) 40 arranged to collate data which is either pushed to the monitoring system or which is collated by MS 40 interrogate various data stores. As shown in Figure 5, a successful AP 14 connection request generates traffic shown by the thin dashed line which results in a ServiceID being associated with the AP's IP address in data store 32. The AP 14 is then able to populate data store 34 to associate its AP ID with its IP address (which may change each type the AP establishes a connection over the access network), and data store 36 which associates the AP IP address with the range of IP addresses that AP may allocate to devices. The data records of data bases 34 and 36 may be merged together in alternative embodiments of the invention.

As shown in the system of Figure 5, when a device 16 associates with an AP 14, it generates traffic which enables an IP address to be assigned to the device. If the device has been suitably configured, the allocation of an IP address results from this association, and does not require the device to have been authenticated to access the roaming service as shown in Figure 5 by back-end authentication server system 42. The traffic which is received by the AP 14 over the open-access roaming or guest WLAN the AP 14 provides is forwarded via the RAS 24 over a separate secure tunnel providing a virtual private network to separate this traffic from the traffic which is generated by devices configured to associate with the private WLAN the AP provides. The AP is configured to automatically forward all traffic received using its roaming service to the VPN node 25, which is configured to route the VPN traffic from roaming devices through to the monitoring system 40, either on a divert or by duplicating the traffic flow it has received over the VPN from the roaming device 16. This may comprise call signalling traffic, signalling traffic when the device seeks to access a web-page, or launch an application prior to authentication. Post authentication, not all trafic is necessarily duplicated. In Figure 5, the traffic flows which are duplicated are signalling traffic flows generated when a device 16 associates with an AP 14 and is allocated an IP address., however, in this context the presence of data is sufficient to track the device location. Also shown in Figure 5 is an additional traffic flow which the AP generates in some embodiments of the invention in which it updates the DHCP server 28 with the IP address it has allocated to a device 16. Not shown is the data flow which may occur if the AP needs to request an IP address from the central DHCP server 38 to allocate to a device, and the resultant communications between the DHCP server 38 and the AP 14.

Both local and remote DHCP IP address allocation could result in the DHCP server 38 updating its records to store a device identifier ("DevicelD") for device 16, for example, a MAC address associated with the device, and the IP address just allocated to the device 16, The data stored may be pulled by the monitoring system from the DHCP server 38 in some embodiments, but in the best mode currently contemplated by the inventors it is pushed by the DCHP server 38 to the monitoring system 40 in real-time so the monitoring system can update its data store 44 to indicate a new IP address has been allocated to a device associated with a suitable device identifier, "DevicelD" in real-time. Alternatively, the AP 14 may directly update the monitoring system 40 using XML or a similiar communications protocol.

Figures 6A to 6C will now be described and show how a device can be allocated an IP address in a communications system according to an embodiment of the invention. Figures 6A and 6C show NAT occurring on traffic flows between the RAS 24 and SSG 48.

Figures 6A, 6B and 6C show various ways of distributing addresses to roaming devices 16,for use in a communications system 10 such as that shown in Figure 1 according to various embodiments of the invention and the elements shown retain the numbering scheme of Figure 1 where appropriate. Figures 2A,2B, and 2C also show how information relating to distributed addresses can be further disseminated within communications system 10.

In Figure 6A, after a roaming device 16 has associated with a WLAN AP 14for example, by responding to a beacon from the WLAN AP 14, the roaming device 16 automatically requests an IP address from the WLAN AP 14. The IP address request can be implemented, for example, by sending a DHCP IP address request to the WLAN AP 14. The WLAN AP 14 responds by locally allocating an IP address to the roaming device 16 from a range of local IP addresses it is configured to distribute to roaming devices. The IP address allocated may be a public address in that it can be uniquely resolved outside the WLAN associated with that WLAN AP 14 to a unique device, but usually one or more layers of network address traversal (NAT) will be used to enable reuse of the IP address space. This means that beyond the secure communications termination point (VPN 25), it is not directly possible resolve the IP address of any communications traffic received over the secure communications link 18 from a roaming device 16 or sent to a roaming device 16, unless the monitoring system 40 interrogates the NAT data store to determine what NAT translations have been implemented. Accordingly, any roaming traffic originating from the access network received at monitoring system 40 can be resolved directly if it is diverted to the monitoring system with its original IP address, but cannot be easily associated with if it has undergone NAT traversal at any point prior to its reception by the monitoring server, unless the monitoring server verifies the translation at the relevant NAT servers along the path the packets have taken.

In Figure 6B, the roaming device 16 generates a local DHCP request, but instead of allocating an IP address itself, the WLAN AP 14 relays the DHCP request over the secure communications tunnel over access link 18 to the VPN 25which duplicates the DHCP request traffic and forwards one version onward towards an appropriate service selection gateway (SSG node 4 shown in Figure 5) see Figure 1) to the control plane, where the central DHCP server system 38 then allocates an IP address. As the VPN node 25 is automatically configured to copy traffic received from and sent using a secure communications tunnel over one of access links 18 to WLAN access points 14 to the monitoring system, the monitoring system can extract for each received traffic flow data it receives data characteristics enabling the monitoring system 40 to determine the IP address of the roaming device 16, and from this the identity of the roaming device 16, its location, and/or other information such as the user(s) of a device, from the data stores shown in Figure 5.

For example, as is shown in Figure 6B, the relayed DHCP request typically contains information such as a roaming device identifier, for example, a MAC source address for a roaming device 16, a WLAN AP identifier, for example, the IP source address of the WLAN AP 14. The monitoring server system 40 can associate such device and WLAN AP identifiers with the location of the WLAN AP 14 by determining to which broadband access service provider the WLAN AP with that MAC address is associated and/or the fixed or wireless communication line identifier that particular WLAN AP 14 is registered to use. If the device identifier (DeviceID) resolves to a type of device for which a user has account information, it is possible to associate a particular user with a location and to monitor movements of the user as the device roams between networks. This is possible even if the device does not attempt to use the networks for roaming services, once a device 16 has associated with a WLAN AP 14 which generates and/or forwards address request traffic for that roaming device 16 using a secure communications tunnel over access link 18 to a termination point provided by the VPN node 25, which enables VPN node 25 to automatically forward such traffic it receives on such tunnels to a monitoring point 40.

Moreover, in such systems, subsequent internet-bound traffic which contains the centrally allocated DHCP IP address can be resolved through the VPN node 25 to a unique device, as the device identity can be determined at the VPN node 25 by the monitoring server 40 querying the DHCP server 38 to determine the identifying MAC address of a roaming device associated with a particular IP address in use. VPN node 25 is configurable to copy in-bound traffic to roaming devices 16 and to forward a duplicated version of such in-bound traffic to monitoring server 40. In one embodiment of a method of monitoring roaming traffic according to the invention, a monitoring station 40 associates via a DHCP IP address request the MAC address of a roaming device 16 with a particular WLAN AP 14, and from that the location of the roaming device 16. This information is then suitably stored in a retrievable form. The DHCP IP response from the central DHCP server 38 to the roaming device 16 is then also intercepted, which enables this record to be supplemented with the centrally allocated DHCP address request. If the roaming device 16 subsequently requires authentication by a user, the WLAN AP 14 will forward an authentication request to the authentication server 42. In some embodiments, the user information detected is then separately associable with a previously stored MAC address for the roaming device 16 and from this, the location of the user of the device can be determined. This also enables the user providing the authentication details to be associated with the traffic generated by a particular roaming device 16 and for this traffic to be monitored based on the device's current IP address as that inbound traffic is being sent to a particular device using that current IP address at the monitoring server 40. In this way, the traffic sent and received by a particular device whilst roaming in an open-access WLAN can be monitored and the geographic location of the device determined remotely in the network from the signalling traffic. In the device location/tracking system described in more detail hereinbelow, the relevant information enabling a particular device's geographic location to be determined is stored in a suitable form for rapid indexing and retrieval, so that it is possible in some embodiments for real-time monitoring and device tracking to be performed. It is also possible to verify the actual user of a device from the user account information entered during the authentication process.

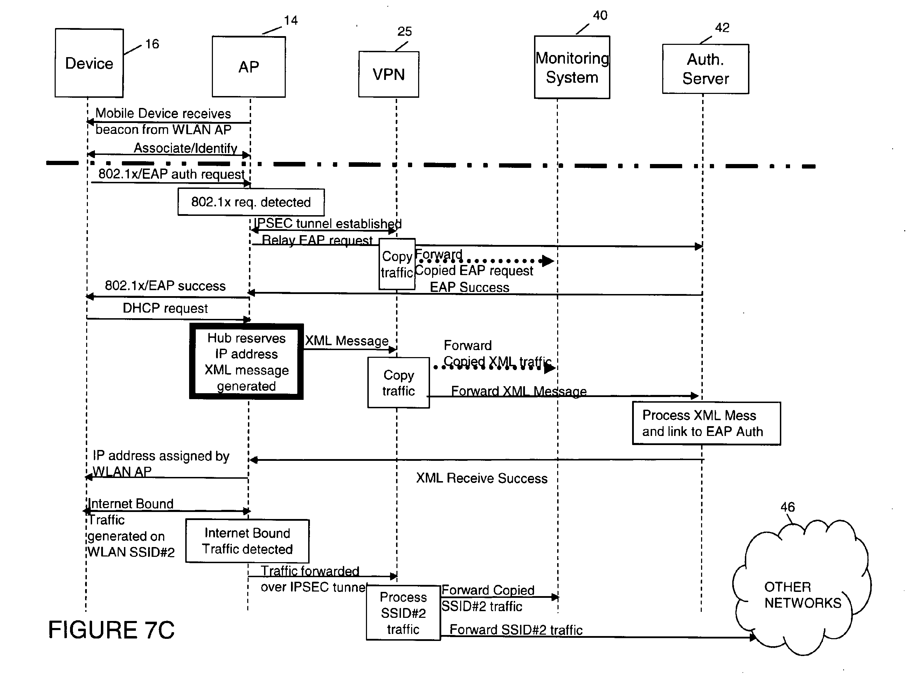

Figure 6C shows an alternative mechanism for associating authentication information for a user of a roaming device 16 with a private IP address assigned locally to the roaming device 16 by the WLAN AP 14. In Figure 7C, the WLAN AP 14 allocates a private IP address to a roaming device 16 from a range of possible addresses allocated to the WLAN AP. A roaming device 16 is not assigned the IP address until after the device 16 has been authenticated by authentication server 42. The authentication traffic which is forwarded from the device via the WLAN AP however, includes as its IP source address the IP source address of the WLAN AP 14. If the traffic forwarded undergoes NAT translation at some point prior to reaching authentication server 44, the authentication server 42 will not know the IP address has been assigned to the device as this will not be apparent from the authentication traffic it receives.

In order for the authentication server 42 to know which NAT translated IP address has been authenticated, so that only IP traffic from an authenticated device is allowed to access a remote network 46 such as the Internet , in one embodiment the WLAN AP 14 is configured to generate a separate authentication message, for example an eXtensible Meta-Language (XML) message. The XML contains sufficient information for the roaming device 16 to enable the authentication server 42 to make the necessary association of the NAT translated IP address of the authentication traffic originating from the roaming device 16 with NAT translated private IP address allocated by the WLAN AP to that particular roaming device 16, for example, the meta-data may include the roaming device Media Access Control (MAC) address, the WLAN AP MAC and/or IP addresses, and/or any other relevant information. As this traffic is intercepted by the monitoring station 40, it is also available to track the location and internet usage of a particular roaming device 16 and/or determine an authenticated user of a particular roaming device 16 whose traffic is being monitored.

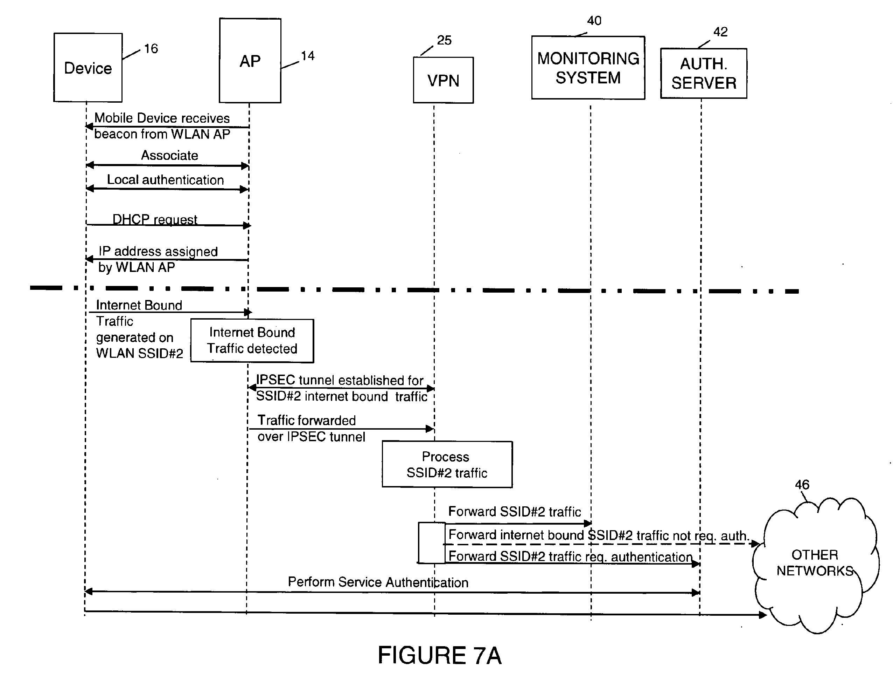

Figures 7A to 7C will now be described which show how the monitoring system collates information from the device traffic it receives from the VPN 25.

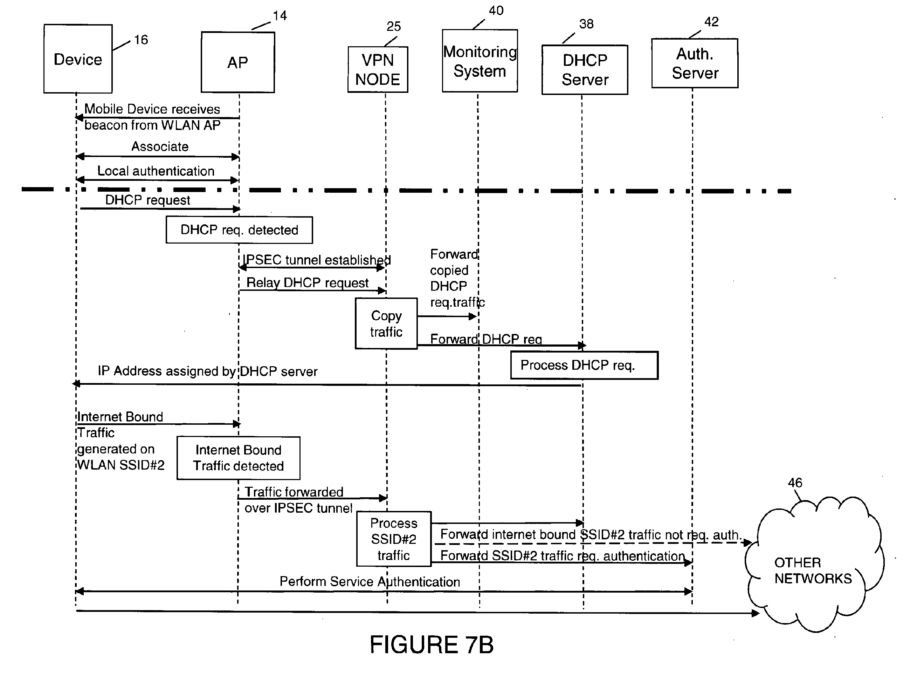

Figures 7A, 7B, and 7B show some exemplary message flows in which messages (for, example" or discrete data-packets of information are sent in order for a roaming device 16 to generate traffic that is intercepted and monitored in a communications system 10 according to different embodiments of the invention. The message flows shown in Figures 7A,7B and 7C may omit messages known in the art as essential but which are not relevant in the context of the embodiments shown.

Figure 7A shows a roaming device 16 detects a beacon from WLAN AP 14 and associates with WLAN AP 14. The device is locally authenticated automatically if, in the case where roaming networks of a plurality of APs have been assigned the same SSID#1, the device has previously been authenticated to use the roaming service offered by one AP by providing appropriate authentication information (often this is a public network where no authentication is required at this stage but sometimes username, service provider in the form of a realm and password are used). The authenticated device is then allocated an IP address by the WLAN AP 14 and can utilize the WLAN provided by AP 14.. If at some subsequent point in time whilst the device is still associated with the same WLAN AP 14 it generates internet bound traffic, for example, by generating a service request using a web-browser or otherwise launching an application which requires internet connectivity, the WLAN AP 14 determines from the destination IP address that the traffic is internet bound and establishes a secure communications link, for example, in the form of an IPSEC tunnel to VPN node 25. VPN node 25 is configured to duplicate all traffic which it receives on a particular port associated with the secure link, i.e., with IPSEC tunnel and forwards this traffic to monitoring system 40. The VPN node 25 also forwards the received traffic on to SSG 48 which determines if the traffic from that device requires authentication before accessing the AP's service provider's roaming network so it can communicated with a remote network 46 such as the Internet or if it can automatically be routed over the AP's service provider's network towards remote network 46.

If authorization is required, the VPN node intercepts the authentication traffic generated by the authentication server 42 which is returned over the same secure communications link associated with that AP (i.e., traffic which flows in the direction of the roaming device is also intercepted and diverted to the monitoring system 40). In this way, the monitoring system 40 is provided with information which includes the device identifier and information enabling the location of the device even if a user of the device does not successfully complete their authorization or does not require authorization for a particular internet-bound service request to be delivered, as the monitoring service updates its data stores when it is notified that a new IP address has been allocated to a device, which occurs even if the device is not authorised to access the service. The monitoring server 40 does not need to access the authorization server and so there is no need to identify to the authorization server the identity of any particular user or device which is being monitored in this way. However, where service authentication is required, as all authentication traffic flows through the same VPN node, it is also possible to monitor and track this information when appropriate.

Figure 7B shows exemplary messages such as may flow in an alternative embodiment of the invention. In Figure 7B, roaming device 16 detects a beacon from WLAN AP 14 and associates with AP 14. If the roaming device 16 has previously been authenticated by a user to use the roaming service, the roaming device 16 will then be configured to automatically perform local authentication (such as may occur when a public network is used where no device authentication is required at this stage but sometimes username, service provider in the form of a network domain and password are requested). The roaming device then generates a DCHP request for an IP address which is detected by the WLAN AP 14. In this embodiment, WLAN AP 14 is configured to relay the DHCP request to a central address server 46. Accordingly, when WLAN AP 14 receives the DHCP request, it establishes a secure communications link, for example, an IPSEC tunnel, to a termination point at the VPN node 25 (which may be collated on the same platform as RAS 24 or at another termination node between RAS 24 and the SSG 48), in the communications system 10 at which point the traffic can be duplicated and a duplicated version monitored at a suitable monitoring point 40. As shown in Figure 7B, WLAN AP establishes an IPSEC tunnel to VPN 25and relays the DHCP request over this tunnel to the VPN 25 which copies the DHCP request (and any other traffic sent over the tunnel). One version of the copied DHCP request is sent to the monitoring server system 40. The other version is end to a central DHCP server 42 in the control plane which processes the request and responds over the same IPSEC tunnel via the WLAN AP 14 to assign an IP address to the roaming device 16. After having an IP address remotely assigned in this way, when the WLAN AP 12 detects internet bound traffic from the device 16 it can be forwarded using the same (or a new) secure link. If authentication is required for this traffic, this proceeds at this point in a similar manner to that shown and described before with reference to Figure 7A with all traffic sent over the secure link being intercepted at VPN node 25 and forwarded to the monitoring station 40.

As shown in Figure 7B, however, it is possible for the monitoring station to intercept traffic prior to a device generating internet-bound service requests or authentication information. The address request (in this example, a DHCP IP address request), and any other signalling the device generates for which the WLAN AP 14 is configured to establish a secure communications link to the communications system 10 for and to forward over that link is capable of being monitored by the monitoring system 40. Figure 7C shows another alternative embodiment in which a roaming device authenticates using the IEEE 802.1x communications protocol for port-based network access control (PNAC) It provides an authentication mechanism for a device to attach to a WLAN to provide a point-to-point connection only if authentication is successful. IEEE 802.1x uses the Extensible Authentication Protocol (EAP) over LANs (EAPOL) for IEEE 802 LAN technologies such as the 802.11 wireless communications suite. A port in the 802.1x communications protocol refers to a single point of attachment to the WLAN infrastructure such as a particular roaming device 16. The WLAN AP 14 authenticates a roaming device 16 using a remote authentication server 42 such as a host platform arranged to support the EAP and RADIUS (Roaming Authentication Dial In User Service) which provides a centralized authentication, authorization, and accounting management. EAP authentication is well known in the art and is not described further herein.

In the embodiment of the invention shown schematically in Figure 7C, the use of the 802.1 x protocol for roaming device authentication enables monitoring point 40 to determine additional information from the unencrypted outer layers of the EAP over RADIUS authentication traffic sent over the IPSEC tunnel established by the WLAN AP 14 with VPN node 25 as well as from the XML message the WLAN AP 14 generates when the roaming device 16 requests an IP address.

As shown in Figure 7C, roaming device 16 detects a beacon from WLAN AP 14 and having associated with the WLAN the roaming device generates an EAP authentication request and sends this to the WLAN AP 14. The EAP authentication request is automatically triggered on association. In this embodiment, when the WLAN AP 14 detects it has received an EAP request, it establishes an IPSEC tunnel to VPN node 25 via which the EAP request is relayed to a suitable authentication server system 42. The EAP request is duplicated at the VPN node 25 and forwarded to monitoring server system 40. As the EAP request is relayed from the WLAN AP 14 to the remote authentication server 42 its source address undergoes NAT translation. This means that the authentication system cannot authenticate IP traffic based on just the source IP address as the authentication system (and similarly the monitoring system) has only a NAT translated WLAN AP IP SA address. The monitoring server system 40 can be optionally configured to be triggered by the detection of an EAP request to monitor traffic generated by authentication server system 42 responsive to that EAP request. If the EAP request is successful, the roaming device 14 is authorized to use the WLAN AP 14 to send a local DHCP request to the WLAN AP 14.

The WLAN AP 14 then allocates an IP address for the roaming device 16 and generates a meta-data message in which its own address is replaced as the source address with the IP address it has allocated for the roaming device 16. This message contains other device identifying information and enables the authorization server to associate the NAT translated address of the message it receives from the WLAN AP 14 with the authentication information. This enables the communications system 10 to be configured to allow internet traffic from roaming device 16 to access a service provider's network to communicate with the remote network 46 based on the NAT translated source IP address of the roaming device 16. It also accordingly enables the monitoring station 40 to track traffic generated by the roaming device 16 and traffic sent to the roaming device 16 using the NAT translated source IP address of the device 16.

Once the authentication server 44 has linked the NAT traversed IP address allocated by the WLAN AP 14 to the roaming device 16, it indicates to the WLAN AP 14 that the roaming device using that IP is authenticated to use the communications system 10 to access the service provider's roaming network service. WLAN AP 14 then releases the allocated IP address to the roaming device 16. Additional authentication may be performed at this point and/or the roaming device 16 is in one embodiment automatically enabled to access a remote network 46 without any prompts being generated for user input. Where the roaming device 16 is automatically authorised and authenticated for internet access using this type of EAP and XML based authentication and advantage is that the user is not requested to enter any additional account or authentication information when an application launched on the device 16 generates a service request requiring internet connectivity (i.e., there is no requirement to halt access to the internet whilst such authentication information is provided). Where such applications are provided on a device and are configured to automatically request information even when roaming as a guest in a WLAN 12a,b,c,d,e offering roaming access, the traffic generated by the roaming device 16 can be easily distinguished from the traffic generated by the home user of a private WLAN provided by the same AP 14a,b,c,d,e, and the device activity and related information remotely monitored within the communications system 10 by monitoring server system 40.

The above description indicates various ways of obtaining information by monitoring signalling traffic in a communications network which is generated by a device roaming from one wireless LAN to another wireless LAN as the device associates with the networks. The roaming traffic, which is monitored includes signalling traffic which originates from one or a plurality of devices roaming in one or a plurality of wireless local area networks and are operated by one or a plurality of different users. According to the various embodiments described herein, at the point where the roaming traffic separation imposed by the secure tunnel terminates, at VPN node 25, the traffic is duplicated. The VPN node 25 is configured to duplicate certain types of traffic in one embodiment, for example, signalling traffic, such assignalling traffic generated by the association of a device with an AP 14, i.e., traffic generated when a device is allocated an IP address for use in the LAN which is received from a plurality of secure tunnels over access links 18, each tunnel being associated with a wireless network access point 14 which provides an open access WLAN which can be used by roaming devices. It is also possible, in some embodiments of the invention, to duplicate any traffic arriving at the VPN 25 which is to be sent via an AP 14 to a roaming device 16 over a secure communications tunnel over an access link 18. In one embodiment a traffic signal is duplicated. Alternatively, the contents of each received packet of information duplicated or just of selected packets. Accordingly, a pair of duplicated versions of received traffic are formed using any suitable mechanism and/or selection criteria and one version is forwarded to an appropriately configured monitoring system and the other version forwarded onwards as appropriate for its purpose. The monitoring system processes the received traffic to determine appropriate information, for example, information which enables the identification of the device and/or the location of the wireless network access point and/or other information such as a user identifier and/or related user account information and/or traffic which is sent to or generated by the device and/or meta-data about the roaming device and/or wireless access point used and/or user of the device. The signalling traffic which is monitored is generated by a roaming device which has previously associated with one or more of said wireless local area networks and in some embodiments which has already been configured to be locally authorised to use the roaming service. However, the monitored signalling traffic includes traffic generated before the device or its user has been authenticated and may include traffic generated during the assignment of an IP address. The device does not have to generate a request to use of the roaming service to trigger the monitoring of its signalling traffic. In other words, a user of the device does not have to request internet access in order for signalling traffic to be monitored, as the wireless access point is configured to establish a secure link for certain types of traffic prior to a duplication point for monitoring purposes prior to the user authentication process being complete.

Monitoring traffic generated d after authentication is also possible, but may result in a larger amount of data being collated than is required to implement a device location or tracking scheme. DHCP signalling will only be retrieved, however, if an AP 14 is using DHCP relay mode. Figures 6A and 7A show schematically how if DHCP service address allocation occurs at the network edge and NAT is used within the core network, a user is only identifiable after they log in to the roaming service. In Figures 6B and 7B, DHCP relay is used which means that user can be identifiable before they log in to the roaming service, depending on where NAT occurs in the communication system. In Figures 6C, and C, DHCP occurs at the network edge but as the WLAN AP provides additional data to the core by sending an additional message it is still possible to identify a user even if NAT has occurred, and this is also possible before the user has logged in to the roaming service.

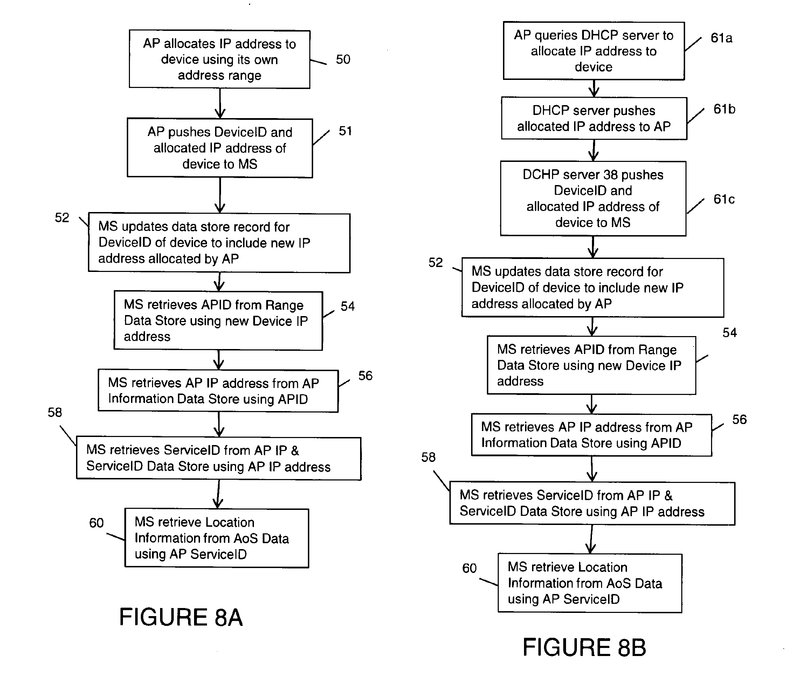

Referring now to Figures 8a and 8b of the accompanying drawings, these show how the monitoring system 40 shown in Figure 5 uses its notification of when a device is allocated a device DSL IP address for use in the WLAN 12 provided by AP 14 as a trigger event for determining the location for that device based on the address associated with the ServicelD of the AP it is using.

In Figure 8a, when a device roams into an area in which an open-access WLAN is provided by AP 14, it responds to the beacons generated by the AP 14 and associates with the AP 14. This triggers the assignment of an IP address to the device by the AP from its pre-configured address range for allocating to devices using its WLAN connectivity (step 50). This causes the AP to push the device ID (e.g. its MAC address or a similar preferably globally unique devicelD) to the monitoring system (MS) 40 (step 51) The MS 40 then updates MS data store 44 to record the new DSL IP address allocated by AP 14. The monitoring system 40 then uses the device IP address to retrieve the APID of the AP 14 the device is using (step 54) from Range data store 36. This comprises checking (using any appropriate range checking process) if the IP address of the device is one within the range of IP addresses which are allocatable to devices using a particular AP14. Once an AP 14 has been located whose allocatable IP address range includes the IP address of the device, the monitoring system uses that AP's APID to perform a look-up operation on the AP Information data store 34 to map this to an AP IP address and then retrieves the AP IP address to perform a look-up operation on the AP IP &ServiceID data store 32 using the AP IP address. If the AP IP address is found to match to a particular ServiceID, the monitoring system 40 can use the ServiceID to retrieve selected information from the service subscriber records from the AoS data store, including the address for service associated with a particular ServicelD, which provides an indication of the location of the device as being with the range of that AP's WLAN. If an AP's has a sufficiently low-range, this information may be sufficient to provide a useful fix on the device IP location.

Figure 8b shows an alternative embodiment in which, as the AP 14 uses a central DHCP server 38 to allocate an address to the Device 16, in which the DHCP server pushes to the MS 40 the DevicelD it has received from the AP 14 together with the DSL IP address it has allocate to that device (steps 61a,b,c).

However, if the device moves a significant amount before reaching another WLAN, a different monitoring system may monitor traffic from the local exchange used by this other WLAN's AP 14.

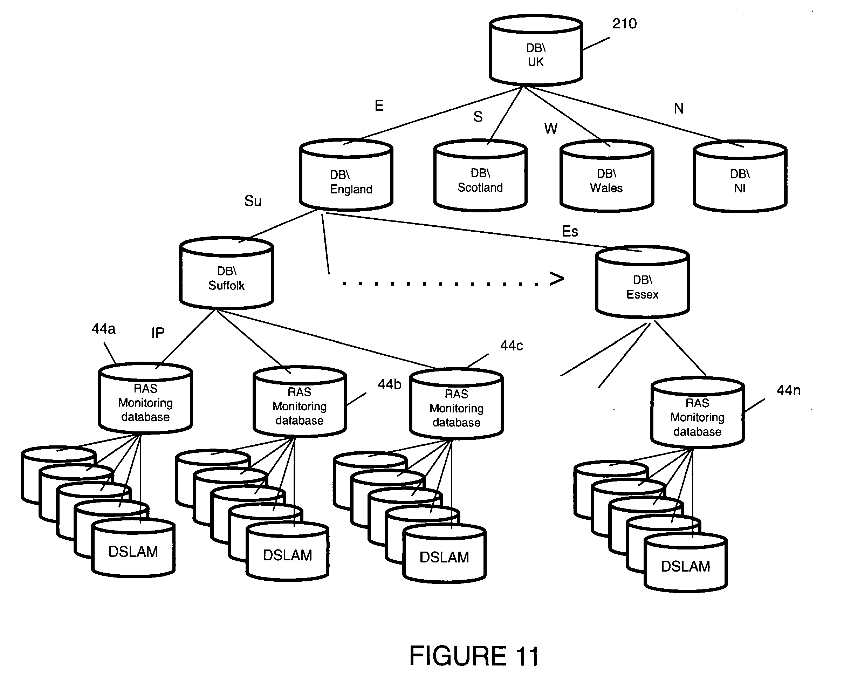

Figure 10 shows how local information gathered at locations A and B can be fed into a hierarchy of monitoring system data stores such as Figure 11 shows. This enables location information for devices collected locally can be centralised on a geographic regional basis which provides a wider scale of geographic coverage as the hierarchical level increases.

As shown in Figure 10, at location A, device 16 with DevicelD (MAC Address): 00:16:cb:84:ab:e7 is allocated IP Address: 10.50.22.3: by AP "A" which has allocatable IP Address Range: 10.50.22.1 - 10.50.22.7. The local area access network applies NAT at the first possible point after termination of the secure tunnel established for roaming or guest device traffic, at VPN node 25 located after RAS 24. At VPN node 25 , all traffic received on a port which terminates a secure tunnel over an access communications link is duplicated and forwarded onwards towards its destination and to the monitoring system. In order for the monitoring system to determine the identity of the device 16, it needs to be able to interrogate the NAT data store to be able to associate the local DSL IP address which will be used by packets in the secure communications link over the access network, and the NAT translation of the device IP address, as an at least once NAT translated address will be associated with the deviceID when traffic is sent from by the AP to the DHCP server and forwarded to the monitoring system. Accordingly, the NAT data store "A" maps addresses to the NAT IP Address Range: 172.20.1.1. - 172.32.255.255 and stores association of the private DSL IP address 10.50.22.3 of device 16 with the NAT translated IP address 172.20.5.5, and this will be pushed down to the monitoring system "A" for storage in data store 44a.

In Figure 10, two DHCP server functionalities are shown. One server 38 deals with the IP address allocation for the DSL network. The other server is implemented within the AP "B" and deals with IP address allocation on the public WLAN interface.
At location B the same device has IP DSL SA 10.90.25.3, which was allocated by AP "B". Similarly NAT at B maps traffic flowing from WLAN B with the IP SA address 10.90.25.3 to 172.20.5.9. Monitoring system B however captures this NAT information, and also stores it locally in its data store "B" 44b. In this embodiment of the invention, each of the monitoring system data store 44a and 44b store for the monitored traffic flows they intercept a DeviceID, the DSL Device IP address, and NAT translation information, and the AP IP, APID, ServicelD and AP Location information obtained by querying the various data stores 30, 32, 34, 36, as described herein above , and if tracking is to be provided in real-time a TimeStamp is also stored, which is associated with the time at which the MS updated the record, unless pushed in by the AP or DHCP server as the time at which the Device is allocated an IP address. However, in alternative embodiments, not all of this data is permanently stored, as for location and tracking purposes, such the devicelD and location information is sufficient Also shown in Figure 10 is a central monitoring server system 200 with its data store 210, which collates the information it receives from a plurality of local data monitoring systems 40a,b.

As each WLAN A and B will allocate the device a different IP address, simply being able to associate a device's IP address with a location at any given time provides no continuity as the device moves between locations A, B, and C and from WLANs 12a to 12d to 12e, as the monitoring system will only be aware of the location of a device IP address for the duration the device is within the range of one of these WLANs. Accordingly, a means of determining the Device ID is also required.

By storing records in which a DeviceID and location history is provided, either by previous entries or by previous entries associated with a time-stamp, it is possible to track a device by proxy by determining the location of the APs it associates with from location A to B to C.

Examples of suitable DevicelDs for indexing such records include, for example, the Media Access Control (MAC) address or other hardware-embedded or securely embedded device identifier of the device. Alternatively, the DeviceID may be provided by a subscriber-associated hardware module such as a SIM card or the like of a type well-known in the art for enabling a mobile communications device to use one or more mobile communications service(s). Typically, however DHCP server 38 will use a MAC address as a Device ID to store in association with its allocated DSL IP address. If remote DHCP address allocation is used, then this address is the private IP address which will resolve to the device 16 if used not only within the WLAN network but it resolves over the DSL access link 18. If the AP allocates a device IP address, it will be unique within that WLAN but may not be beyond this.

Whenever NAT on a monitored traffic flow's IP SA occurs, the monitoring system 40 must update a DevicelD record for the device which has generated the traffic flow to track the pre-NAT translated and post-NAT translated addresses to continue enable the device to be mapped to a valid location. As mentioned hereinabove, in Figure 10, local NAT server A updates local monitoring system 40a whenever it performs NAT, and local NAT server B updates local monitoring system 40B whenever it performs NAT. Both monitoring servers push their data records to a centralised monitoring server 40c which stores data records of each monitoring server including the APID which has allocated a particular IP SA address to each devicelD, and the deviceID. As the APID is also unique, this ensures that even when two devices in different IP addressing domains are using the same IP address (as a result of the address domain separation imposed by the NAT process), the central monitoring system can still resolve each device using its DevicelD and the APID of the AP it is using, and hence determine the correct location of the device.

Referring again to Figure 10, in this embodiment of the invention roaming device 16 is first allocated a Private IP address and port number from an IP address range supplied to an AP 14 via the RADIUS server's ServiceID&IPAddress database 32. The AP14 has built in DHCP server functionality which allocates a device IP address and port number from the allocated range. The IP SA allocated to the device is then forwarded by the AP to the network-based DCHP server 38 along with the device MAC address. Both the Device MAC address and Private IP address are then forwarded by the DHCP server and stored with the Monitoring System Data Store 44. Not shown in Figure 10 is the equivalent system for location B, as the IP address may be allocated using the same addressing scheme (such as is shown in Figure 6b) or a different addressing scheme, for example, on such as one shown in Figures 6a,6c.

To reduce the processing complexity of any location service the physical location associated with the authentication is only carried out when required. This does however mean that the distributed database structure needs to rapidly resolve the location when required. However, the monitor database effectively represents a physical region of the country since each RAS 24 is dimensioned to support typically between 50K to 100K customers associated with a number of connected DSLAMs. In this way, a RAS 24 functions as a "macrocell" while a DSLAM functions as a smaller scale microcell. Each of these can be mapped to an area geographical coverage to provide a means of mapping movement both locally and nationally, by using a hierarchy of monitoring systems. Thus it can be seem that one element of an efficient database structure is to use the monitor data base associated with a RAS as a macrocell element on a location database hierarchical structure where each DSLAM represents a lower element. As each WLAN has a small range, incremental movement of a device will normally be localised and this approach to the database structure provides an efficient organisation as the associated movement data is local in its logical structure. This provides geographical scalability.

Figure 11 shows an example of a potential data store structured for providing geographic coverage of the UK. The root DB (UK) data store contains a list of all current MAC addresses and user ID, a marker to show if the device requires tracking with a vector point to the next DB below, such as E for England. An enquiry at this root note can determine if a particular MAC is on line at that time. If it is then the entry against it will have E for England. Similarly until IP for Ipswich. Once an entry is determined down to the BRAS, the monitor DB associated there can be used to determine the location.

Returning now to Figure 10, here to find the location the following method is used in one embodiment of the invention. First, the monitoring system 40a queries using a deviceID the its monitoring database 44a which returns current Private IP address of the device, this is used to the range data store 36, which returns the APID. The monitoring system uses the APID to query the AP Information data store 34 to determine the current DSL IP address allocated to the AP 14, and then queries the data store 32 used by the RADIUS server 28 which enables the AP's ServicelD to be determined. Finally the monitoring system queries using the SID the subscriber record data store 30 which enables the location of the address for service associated with that ServiceID to be verified.

The monitoring service may track devices, particularly if the devices have registered for a tracking service. For example, in one embodiment, a monitoring record stored in monitoring data store 44 contains the device Mac address, a time stamp recording when traffic was intercepted from the device and/or alternative the time the IP address of the device was allocated by the AP, the AP's IP address and a reference number for the relevant DSLAM data base.

By providing a suitable interface to the monitoring system itself, and processing the location data retrieve, the location of a device can be shown on a suitable map display. The movement data is recorded locally with a monitoring data store 44 if it is configured to record a history of device locations. If the local data stores 44a,b provide local movement changes at a fine level of granularity, the fine-level of the location data may be remove as the data is stored further up in the monitoring system data store hierarchy.

In this way, the above structure organises local changes at the local level in its logical structure to provide a scalable and rapid search strategy. It provides a means to track identified devices over a large scale, despite the very small scale of each WLAN and in a way which minimises the amount of data to be stored. The processing is conserved to minimum and only used to track devices when required.

Exemplary embodiments of the invention are described in detail herein above and pictorially in the accompanying drawings, however, the invention is not intended to be limited to such exemplary embodiments and includes various obvious modifications and equivalent arrangements which fall within the scope of the appended claims. Features referred to explicitly herein and in the claims may be replaced with alternative features providing functional equivalents where such functional equivalents would be known to those of ordinary skill in the art.

In the above description, references to "one embodiment," "an embodiment," "example embodiment," "various embodiments," etc., indicate that the embodiment(s) of the invention so described include a particular feature, structure, or characteristic. However, it is not necessary for every embodiment to comprise that particular feature, structure, or characteristic. Where the phrase "in one embodiment," or "in an exemplary embodiment," is referred to herein above it may or may not refer to the same embodiment as would be apparent to one of ordinary skill in the art.

Terms referring to features such as, for example, "processing," "computing," "calculating," "determining," or the like refer to an action and/or process(es) undertaken by a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

The term "computing platform" comprises one or more data processors; where a data "processor" refers to any device or portion of a device that processes electronic data from registers and/or memory to transform that electronic data into other electronic data that is capable of being stored in registers and/or memory.

One or more embodiments of the invention include apparatuses for performing the operations herein. An apparatus may be specially constructed for the desired purposes, or it may comprise a general purpose device selectively activated or reconfigured by a program stored in the device.

Where appropriate, a feature described herein in an embodiment of the invention may be implemented in one or a combination of hardware, firmware, and software. Where a feature is implemented as instructions stored on a machine-readable medium, such instructions may be read and executed by a computing platform to perform one or more or all of the operations and/or method steps described herein.

The term "machine-readable medium" comprises any mechanism for storing or transmitting information in a form readable by a machine (e.g., a computer). Examples of machine-readable mediums include, but are not limited to : read only memory (ROM), random access memory (RAM), magnetic disk storage media, optical storage media, flash memory devices, and propagated electrical, optical, acoustical or other suitable digital and/or analogue signals (for example, carrier waves, infrared signals, digital signals, etc).

References to the term "computer program" and/or "computer control logic" include as appropriate references to machine code and/or executable code and/or source code which when compiled results in execution on a computing platform of the computer program.

A computer program may be provided in an electronically downloadable format or in a format which is stored in the main memory and/or secondary memory of a computing platform and/or data storage means capable of being attached and removed from a computing platform. Where a computer program is stored in one or more data storage means it comprises a computer program product. Such computer programs, when executed, are arranged to enable the computer platform or system to perform the features of the present invention as discussed herein. In particular, the computer programs, when executed, are arranged to enable a processor to implement one or more steps in a method according to an embodiment of the invention. Accordingly, such computer programs may represent data controllers of the computer system.
A computer program product comprising a computer readable medium having control logic (computer software) stored therein may be provided to distribute the invention or cause, when the product is loaded and running on one or more computer platforms, a method according to an embodiment of the invention to be performed. The control logic, when executed by one or more processors, causes the one or more processors to perform one or more of the functions of a method according to an embodiment of the invention as described herein. The computer program product software may be loaded into a computer system using any appropriate means, including appropriate data storage reading means and/or via a network communications interface card. Software implementing control logic executed by a data processor causes the processor to perform the functions of an embodiment of the invention as described herein. The computer program product software may run as a standalone software application program running in an operating system. Alternatively, it may be integrated into an operating system of the computing platform.

Features implemented primarily in hardware may comprise, but are not limited to, hardware components such as application specific integrated circuits (ASICs), field programmable gateways (FPGAs) or one or more state machines, etc. Any appropriate implementation of the hardware state machine so as to perform the functions described herein may be used as is apparent to a person or persons skilled in the relevant art(s). The embodiments and examples discussed herein are non-limiting. The embodiments of the invention described in detail herein above form exemplary embodiments only and it will be apparent to those skilled in the art that changes and modifications may be made without departing from the spirit and scope of the invention, for example, in its broader aspects. The embodiments of the invention as defined in the claims are intended to cover all such changes and modifications as fall within the true spirit of the invention.

In some scenarios, all roaming WLANs are assigned a consistent SSID, which means a device which has successfully attached whilst roaming to one network SSID may automatically generate signalling traffic when it roams in other WLANs sharing that SSID. This signalling can include IP address information which is generated without a user necessarily actively using the device to generate a request for service (such as, for example, generating a request for content which would require the device to connect to the internet) which would require the user to authenticate their use of the wireless access point roaming service.

## Claims

1. A communications system (10) arranged to enable the location of a mobile communications-enabled device (16) in each of a plurality of open-access short-range wireless communications local area networks (12) to be tracked in real-time, the system comprising:
means to verify the location of each said wireless access point providing asaid open-access wireless local communications area network used by said device (16);
means to allocate an IP address to said device when it associates with each said wireless access point; and
means to determine from each allocated address, in real-time the wireless access point the device has most recently associated with, and
means to associate with the device with the verified locations of each of said plurality of wireless access points.

2. A system as claimed in claim 1, wherein said plurality of verified locations are stored sequentially in a time-order associated with the time at which the most recent address is allocated.

3. A system as claimed in claim 1, wherein said plurality of verified locations are stored in association with time-stamp information recording when said location is determined.

4. A system as claimed in claim 1, wherein said plurality of verified locations are stored in association with a time-stamp indicating when a said IP address location was allocated.

5. A system as claimed in claim 1, wherein said plurality of verified locations are stored in association with a time-stamp indicating when a said IP address location was last verified.

6. A system as claimed in any previous claim, further comprising:
means to determine from the allocated address, if said allocated address is within the range of addresses which are allocated to said access point, and if so, to determine from a device identifier for the access point (14), the location of the access point.

7. A system as claimed in any previous claim, wherein the location of the access point is verified each time the access point re-negotiates its connectivity over an access network with an access server.

8. A system as claimed in claim 7, wherein the location is verified by determining if the DSLAM port used by the connection over which said connectivity request is sent to the access server is associated with the same service identifier stored in a data store accessible by said access server in association with said device identifier for said access point.

9. A system as claimed in any previous claim wherein the access point 14 includes digital subscriber line modem functionality.

10. A system as claimed in any previous claim wherein the access point 14 includes functionality enabling it to transmit data over an optical network.

11. A method of tracking the location of a mobile communications-enabled device (16) in each of a plurality of open-access short-range wireless communications local area networks (12) in real-time, the method comprising:
allocatting an IP address to said device when it associates with each said wireless access point; and
determining from each allocated address, in real-time the wireless access point the device has most recently associated with, and
associating with the device with the verified locations of each of said the wireless access points.

12. A method as claimed in any previous claim wherein the access point 14 includes digital subscriber line modem functionality.

13. A method as claimed in any previous claim wherein the access point 14 includes functionality enabling it to transmit data over an optical network.
